# EUROPEAN PATENT APPLICATION

(11) **EP 4 686 704 A1**
(43) Date of publication of application: **04.02.2026**
(21) Application number: 24192679.9
(22) Date of filing: 02.08.2024
(51) Int. Cl.: C02F 1/00, B01J 35/33, C02F 1/72, C02F 1/74, C02F 101/36

(54) **CATALYST DEVICE AND METHOD FOR DEGRADING ORGANIC POLLUTANTS IN WATER**

(71) Applicant: Oxyle AG, 8952 Schlieren (CH)
(72) Inventor: Zlobinski, Mateusz, 8856 Tuggen (CH); Staufert, Silvan, 8620 Wetzikon (CH); Nizar, Ahmed, 8047 Zürich (CH)
(74) Representative: Prins Intellectual Property AG

(57) **Abstract**

A catalyst device (1) for degrading organic pollutants, in particular perfluorinated alkyl substances (PFAS), in water, the device comprising a main fluid inlet (2), a main fluid outlet (3), an auxiliary fluid inlet (83), a catalyst chamber (6) fluidly connected with the main fluid inlet (2) and the main fluid outlet (3), and an auxiliary fluid chamber (8) fluidly connected with the auxiliary fluid inlet (83); wherein the catalyst chamber (6) comprises at least one catalyst bed (6a, 6b) with a granular piezoelectric catalyst; wherein a separating wall (81) provided with a plurality of through holes (53) separates the auxiliary fluid chamber (8) and the catalyst chamber (6), wherein the plurality of through holes (53) are distributed over the separating wall (81) to create a turbulent flow of water in the catalyst chamber (6) for activation of the bed (6a, 6b) of piezoelectric catalyst when water flows from the auxiliary inlet (83) towards the fluid outlet (3).

## Description

### Technical Field

The invention relates to a catalyst device and catalyst device arrangement for degrading pollutants, in particular perfluorinated alkyl substances (PFAS), in water and a method for processing polluted water with said catalyst device.

### Technical Background

The present invention is utilized in the field of water treatment, in particular in the removal of organic pollutants (so called trace- or micropollutants) from polluted water, where said organic pollutants are degraded or destroyed. More than 100'000 of such harmful organic pollutants are known of today. A class of particular concern are perfluorinated alkyl substances (PFAS), consisting of approximately 10'000 different distinct compounds. These compounds are harmful to humans and the ecosystem even if they're present at very low concentrations in the water. Hence, regulators like the US EPA are seeking to impose allowable levels of PFAS in e.g. drinking water as low as 4 parts per trillion (ppt or ng/L) for specific compounds. In the European Union, regulators are enforcing a 100ppt discharge limit for the sum of some 20+ PFAS on industrial plants or for the remediation projects.

Existing methods that are used to degrade organic pollutants involve electrochemical processes (typically termed advanced oxidation process or advanced reduction process, AOP and ARP respectively). These processes rely on the use of radical species such as hydroxyl radicals or aqueous electrons. The three major pathways to generate said radicals are through chemical reaction (e.g. UV/H2O2 or H2O2 catalysis on TiO2), through photocatalysis, or through direct electrolysis using immersed electrodes. However, these methods are ineffective as they are only capable of treating a limited range of the > 100'00 organic pollutants; they consume a significant amount of chemicals and/or electricity incurring high cost as a result; they have limited applicability in water polluted by secondary pollutants (i.e. high turbidity).

For PFAS destruction in particular, several methods to degrade organic pollutants are being investigated and commercialized. Most commonly, electrochemical oxidation through direct electrolysis of immersed electrodes is employed with a typical energy use of 10 to 50 kWh/m3 of polluted water. Other emerging technologies such as supercritical water oxidation, hydrothermal oxidation or ultrasonic cavitation in combination with piezoelectric elements (such as US2013026108A1) use even more energy, typically >100kWh/m3.

These shortcomings can be addressed by assemblies and methods for treating polluted water; and in particular assemblies and methods in which a piezoelectric element is strained as to generate transient electric charges on a surface of said piezoelectric element, and wherein said generated electric charges cause redox reactions (AOP and ARP) which degrade pollutants in the polluted water (see WO2022167915 A1 by the same applicant).

### Summary of the Invention

It is an objective of the invention to provide a catalyst device for efficiently treating polluted water with maximized reaction rates while reducing the overall energy consumption. It is another objective that the catalyst device is easy to maintain, to replace and to produce cost-efficiently.

At least one of the objectives of the present invention is achieved by a catalyst device according to claim 1, a catalyst device arrangement according to claim 8 and a method according to claim 9.

The catalyst device for degrading organic pollutants, in particular perfluorinated alkyl substances (PFAS), in water comprises a main fluid inlet, a main fluid outlet, an auxiliary fluid inlet, a catalyst chamber fluidly connected with the main fluid inlet and the main fluid outlet, and a fluid chamber fluidly connected with the auxiliary fluid inlet. The catalyst chamber comprises at least one catalyst bed with a granular piezoelectric catalyst. A separating wall provided with a plurality of through holes separates the fluid chamber and the catalyst chamber. The plurality of through holes are distributed over the separating wall to create a turbulent flow of water in the catalyst chamber for activation of the bed of piezoelectric catalyst when water flows from the auxiliary inlet towards the fluid outlet.

In use, polluted water flows through the main fluid inlet into the bed of piezoelectric catalyst within the catalyst chamber towards the main fluid outlet. The flow rate of the polluted water and the packing of the piezoelectric catalyst is chosen to achieve a gentle to intermediate activation of the piezoelectric catalyst while minimizing the pressure drop between main inlet and main outlet. During this stage of operation, the auxiliary inlet may be closed. The chosen flow conditions are sufficient to ensure a stable performance for a predetermined time while minimising the energy consumption.

The piezoelectric catalyst is activated through the piezoelectric effect (i.e. mechanical stress is applied to trigger an electrochemical reaction) by subjecting the piezoelectric catalyst to a turbulent flow of a water at sufficient fluid velocities. The catalyst device allows the delivery of water to the piezoelectric catalyst, while minimizing the pressure losses in the system. The bed of piezoelectric catalyst thereby experiences a uniform distribution of force/vibrations for its activation.

The force/vibration experienced by the piezoelectric catalyst causes it to be strained and the said strain caused in the piezoelectric catalyst gives rise to the generation of transient electric charges on the surface of said piezoelectric catalyst. These transient electric charges on the surface of said piezoelectric catalyst cause the formation of reactive radical species, such as hydroxyl or superoxide radicals for example, on the surface of the piezoelectric catalyst (these reactive radical species may be formed using oxygen taken from water molecules of the polluted water). The reactive radical species react with pollutants in the polluted water which are in contact with the surface of the piezoelectric catalyst and/or which are in close proximity to the piezoelectric catalyst. The reactions between the reactive radical species and pollutants are redox reactions. The redox reactions between the reactive radical species and pollutants degrade the pollutants in the polluted water.

After the predetermined time or at predetermined intervals, the performance of the piezoelectric catalyst may be affected by the presence of co-contaminants in the polluted water. When this happens, the flow of the polluted water from the main fluid inlet to the main fluid outlet may be stopped. At the same time a regeneration fluid is flown from the auxiliary fluid inlet into the auxiliary fluid chamber and from there enters the catalyst chamber through the plurality of through holes, which are distributed over a large area of the catalyst chamber. The regeneration fluid is thereby evenly distributed over the entire bed of piezoelectric catalyst. The arrangement and dimensions of the through holes is such that a uniformly distributed but turbulent flow is generated that transports the regeneration medium through the bed of piezoelectric catalyst towards the main fluid outlet and/or the main fluid inlet.

To run an efficient process, the piezoelectric catalyst is packed within the catalyst chamber to maximize the reaction rates. While increasing the mass of the piezoelectric catalyst increases the reaction rate, a too dense packing increases also the stiffness of the bed of piezoelectric catalyst resulting in lower deformation of the piezoelectric catalyst and hence reduce activation of the piezoelectric catalyst.

The catalyst device has thus two operational modes: Firstly, feeding of polluted water through the main fluid inlet and the catalyst chamber towards the main fluid outlet. This mode may be used to treat polluted water under reduced energy consumption. Secondly, feeding regeneration fluid through the auxiliary fluid inlet and the auxiliary fluid chamber through the separating wall to catalyst chamber towards the main fluid inlet and/or main fluid outlet. This mode is mainly used to regenerate the piezoelectric catalyst in the catalyst chamber. It may also be used to feed and treat polluted water directly with a higher efficiency but also slightly higher energy consumption due to higher turbulences.

Further embodiments of the invention are set forth in the dependent claims.

In some embodiments the catalyst device may comprise an outer tube with a first end and an opposite second end and an inner tube with a first end and an opposite second end. The inner tube defines the catalyst chamber and is arranged concentric within and spaced apart from the outer tube. The auxiliary fluid chamber is defined by the space between the outer tube and the inner tube. The inner tube forms the separating wall, and the through holes are radially distributed over the length of the inner tube.

The outer tube may be a single part with a hole in the side wall for the auxiliary fluid inlet. The outer tube may comprise several parts connected to each other. In that case the auxiliary fluid inlet may be arranged between the parts of the outer tube.

In some embodiments the inner tube and the outer tube may be connected to each other at their respective ends with a removable cap accommodating the main fluid inlet and the main fluid outlet, respectively.

In some embodiments the catalyst chamber may include a perforated retainer plate at both ends near the main fluid inlet and the main fluid outlet, the perforated retainer plates defining a perforated wall of the catalyst chamber. Thus, the perforated retainer plates may be arranged at both ends of the inner tube. The retainer plate may have the size of the inner diameter of the inner tube. Sufficient space may be provided between the retainer plate and the fluid outlet to minimize pressure losses.

In some embodiments the catalyst chamber may comprise at least two catalyst beds separated from each other by a perforated spacer. The spacer may be formed by one perforated plate, or more perforated plates spaced apart from each other.

In some embodiments the piezoelectric catalyst may be arranged within a mesh to form the at least one bed of piezoelectric catalyst.

In some embodiments the through holes may be sized and the flow rate through the catalyst device adjusted to obtain a fluid nozzle velocity of 0.2 to 6 m/s.

In some embodiments the through holes may have a diameter in the range of 0.1 to 3 mm and are spaced apart in longitudinal direction by less than 50 mm and/or the radial distance between the inner tube and the outer tube is in the range of 5 to 50 cm.

In some embodiments the ratio of the total cross-sectional area of all through holes to the cross-sectional area of the inner tube is between 0.2 to 2.

In some embodiments the piezoelectric catalyst may be packed in the catalyst chamber with 50 to 500 grams, preferably 150 to 300 grams of piezoelectric catalyst per litre of volume of the catalyst chamber.

In some embodiment the piezoelectric catalyst comprises a composite material comprising a matrix which comprises a polymeric material, and piezoelectric particles embedded in the matrix. Preferably, the polymeric matrix comprises one or more of the following poly(vinylidene fluoride) PVDF, poly(vinylidene fluoride-co- trifluoroethylene) PVDF-TrFE, poly(vinylidene fluoride-co-trifluoroethylene- co-chlorofluoroethylene) PVDF-TrFE-CFE, Poly(vinylidene fluoridehexafluoropropylene) PVDF-HFP, Poly(vinylidene fluoridebromotrifluoroethylene) PVDF-BTFE, poly(L-lactic acid) PLLA, Polyarcrylonitril (PAN), poly(a-hydroxy acid) PAHA, Nylon-7 or Nylon-11. Preferably, the piezoelectric particles which are embedded in the matrix comprise one or more of Barium-Calcium-Zirconate-Titanate (BCZT), Barium-Calcium-Titanate (BCT), potassium-sodium niobate (KNN), Lithium- Niobiate (LiNbO3), Lead-zirconate-titanate (PZT), Zinc-Oxide (ZnO), Barium- Titanate (BaTiO3), Bismuth Ferrite (BiFeO3). Most preferably the piezoelectric particles which are embedded in the matrix have a diameter size between 10nm - 50nm or between 10nm - 100nm; most preferably the piezoelectric particles have a diameter size of about 10nm.

In some embodiments the granular piezoelectric catalyst may have a particle size in the range of 1 to 50 mm, preferably 3 to 20 mm.

In some embodiments the piezoelectric catalyst may be porous and/or has a porous surface. The piezoelectric catalyst may have a porosity of 50 to 95 % and/or a macroscopic young's modulus of 10 to 500 MPa.

The granular piezoelectric catalyst may be configured to be easily deformed by a turbulent flow of polluted water. Preferably, the piezoelectric catalyst comprises an elastic material with a macroscopic young's modulus between 10 MPa and 500 MPa, allowing the piezoelectric catalyst to be deformed by the turbulent flow of the polluted water around it.

The piezoelectric catalyst is strained by 0.01% to 1% without causing damage or permanent deformation of the granular piezoelectric catalyst.

Preferably, the piezoelectric catalyst is porous and/or has a porous surface. Advantageously a piezoelectric catalyst which is porous and/or has a porous surface increases the contact area of the piezoelectric catalyst thus enabling a greater volume of the polluted water to come into contact with the piezoelectric catalyst in a shorter time. It should be noted that, in the present invention, it is not necessary for the polluted water to permeate through the piezoelectric catalyst in order to degrade pollutants in the polluted water.

In some embodiments a longitudinal axis of the through holes may be at an angle of 0 to 70 degrees to a perpendicular of the separating wall, preferably 30 to 70 degrees. Angled through holes may lead to enhanced catalyst activation.

In some embodiments at least one guide blade is arranged within the catalyst chamber to redirect the flow of water. Guide blades may be placed every approx. 30 mm in a longitudinal direction. The guide blades may lead to enhanced catalyst activation.

The invention further relates to a catalyst device arrangement comprising a catalyst device as described above and means for introducing gas into the water upstream of the main fluid inlet or the auxiliary fluid inlet of the auxiliary fluid chamber to generate a fluid with a gas-water ratio of in the range of 0.05 to 1.0, preferably with a gas-water ratio in the range of 0.1 to 0.3. An optimal gas-water ratio results in optimized catalyst activation while keeping energy losses due to increased compressibility of the gas-water mixture low. The through holes in the separating wall or the inner tube will help to break up the gas bubbles, delivering a fluid stream with fine bubbles that penetrate deep into the bed of piezoelectric catalyst, thereby providing homogenous activation of the piezoelectric catalyst. Means for introducing gas may be present on the main fluid inlet and/or the auxiliary fluid inlet.

In some embodiments the means for introducing gas may be a venturi injector.

In some embodiments the introduced gas may be pressurized gas or gas / air taken from the environment.

In some embodiments pressurized gas may be directly introduced or via the venturi injector.

In some embodiments the means for introducing gas may be arranged upstream of a single catalyst device or upstream of several catalyst devices fluidly arranged in parallel.

The invention further relates to a method for degrading organic pollutants, in particular perfluorinated alkyl substances (PFAS), in water using a catalyst device as described above or a catalyst device arrangement as described above. The method comprises a step of feeding polluted water through the main fluid inlet into the catalyst chamber for degrading the organic pollutant via the catalytic reaction of the piezoelectric catalyst while the water flows towards the main fluid outlet.

In some embodiments a regeneration fluid may be fed through the auxiliary fluid inlet into the auxiliary fluid chamber and the regeneration fluid may be evenly distributed through the plurality of through holes over the catalyst chamber to generate a turbulent flow for activation of the piezoelectric catalyst.

Typically, the flow-condition for the polluted water through the main fluid inlet are chosen to result in a gentle to intermediate activation of the catalyst sufficient to ensure stable performance of the catalyst for a certain duration while minimising the energy use. After some time however, the piezoelectric catalyst may lose performance when polluted water is feed to the main fluid inlet. When the performance starts to be affected by the presence of co-contaminants in the polluted water or reaches a predefined threshold, the piezoelectric catalyst is subjected to a profound activation by feeding a regeneration fluid to the auxiliary fluid inlet.

The flow rate of the polluted water may be chosen to achieve a modified Reynolds number for porous media above 2. The modified Reynolds number for porous media is defined as Re = rho*U_0/((1-eps)*S v*mu) where rho is the density of the polluted water, U_0 is the average flow velocity, eps is the porosity of the catalyst, S_v is the specific surface area per unit volume of the catalyst and mu the dynamic viscosity of the polluted water.

In some embodiments, the regeneration fluid may be feed to the catalyst device simultaneously with the polluted water.

In some embodiments, feeding polluted water through the main fluid inlet may be stopped before feeding the regeneration fluid. Thus, the method may comprises the steps of: (i.) stop feeding polluted water through the main fluid inlet, (ii.) feeding a regeneration fluid through the auxiliary fluid inlet into the auxiliary fluid chamber and evenly distributing the polluted water through the main fluid inlet through the plurality of through holes over the catalyst chamber to generate a turbulent flow for activation of the piezoelectric catalyst, (iii.) stop feeding the regeneration fluid and proceed with feeding polluted water through the main fluid inlet.

In some embodiments the water may be enriched with gas upstream of the fluid inlet or the first chamber to generate a fluid with a gas-water ratio of in the range of 0.05 to 1.0, preferably with a gas-water ratio in the range of 0.1 to 0.3, in order to provide optimal catalyst activation while maintaining low energy consumption. This range may be used to provide optimal reaction efficiency i.e. activation of the piezoelectric catalyst.

In some embodiments the polluted water or the regeneration fluid may be enriched with gas upstream of the fluid inlet or the first chamber to generate a fluid with a gas-water ratio of 0.6 to 0.8 in order to provide heavy shaking and activation of the catalyst such that blockages due to compacting of the catalyst are reverted. This procedure to reverse clogging of the catalyst bed may be performed during short time intervals.

In some embodiments the regeneration fluid may be polluted water, treated polluted water, clean water, an organic solvent, or a mixture thereof. The regeneration fluid may comprise an acid, a base, a salt, a gas or a mixture thereof.

In some embodiments the regeneration fluid may be made to cavitate when it passes through the through holes. This may be achieved by enriching the regeneration fluid with gas and/or pressurizing the regeneration fluid to 2 to 8 barg.

In some embodiments the flow of polluted water through the main fluid inlet and/or the flow of regeneration fluid may be continuous. The flow of polluted water through the main fluid inlet and/or the flow of regeneration fluid through the auxiliary fluid inlet may be pulsed. The flow rate or the pressure of polluted water and/or regeneration fluid may be constant or vary over time in predefined intervals to achieve a pulsed flow.

### Brief Explanation of the Figures

The invention is described in greater detail below with reference to embodiments that are illustrated in the figures. The figures show:
- Fig. 1: a sectional view a catalyst device;
- Fig. 2: a perspective and partially sectional view of the catalyst device of Fig. 1;
- Fig. 3: schematic diagrams of a catalyst device arrangement with means for introducing gas;
- Fig. 4: a cross section of an inner tube with angled through holes;
- Fig. 5: shows a sectional view of the catalyst device of Fig. 1 with flow of polluted water;
- Fig. 6: shows a sectional view of the catalyst device of Fig. 1 with flow of regeneration fluid.

### Embodiments of the Invention

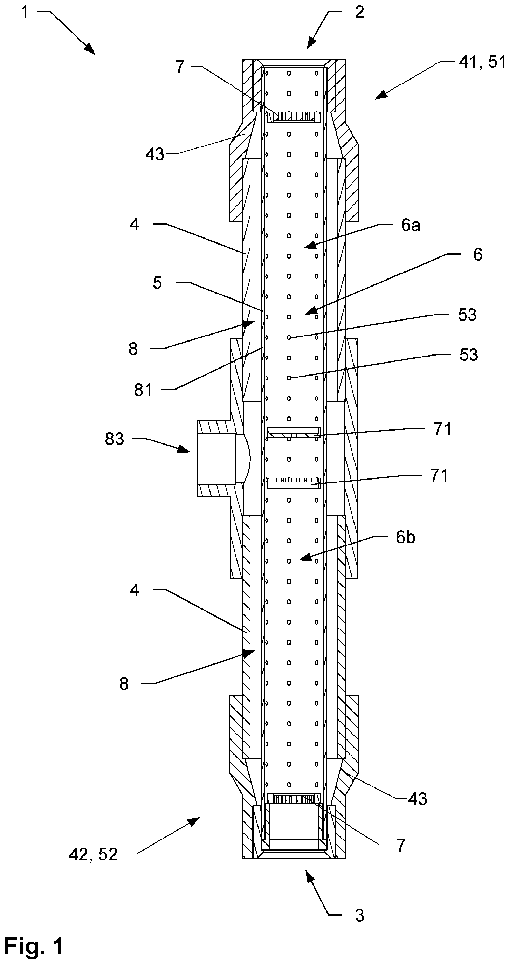

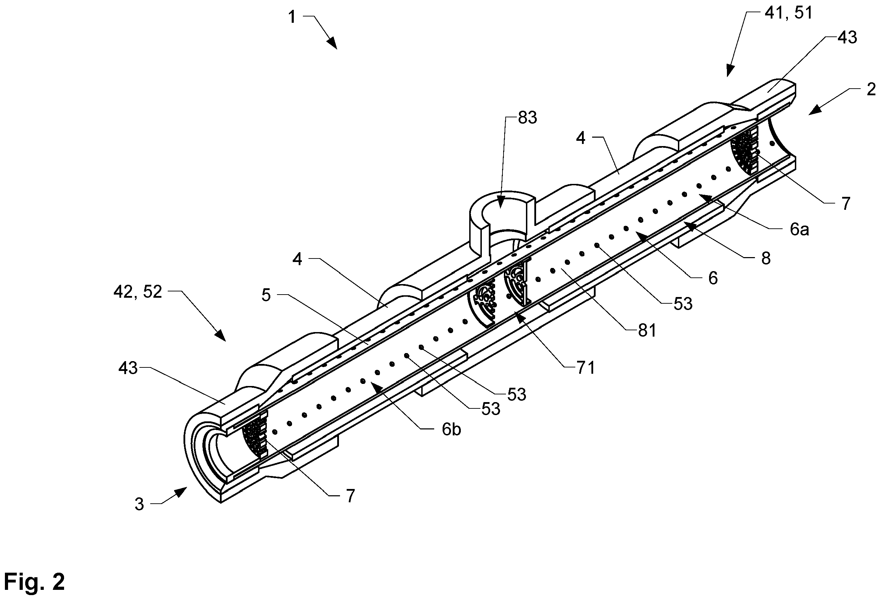

Fig. 1 shows a sectional view of a catalyst device 1 for degrading organic pollutants in water. Fig. 2 shows the catalyst device of Fig. 1 in perspective view with cut-open outer wall.

The catalyst device 1 comprises a main fluid inlet 2 at a first end of the catalyst device 1 for feeding the catalyst device 1 with wastewater and a main fluid outlet 3 at a second end of the catalyst device 1 for discharging treated water. The device 1 further comprises an outer tube 4 forming an outer wall of the device and an inner tube 5, which is arranged concentric within and spaced apart from the outer tube 4. The outer tube 4 has a first end 41 and an opposite second end 42. The inner tube has a first end 51 and an opposite second end 52.

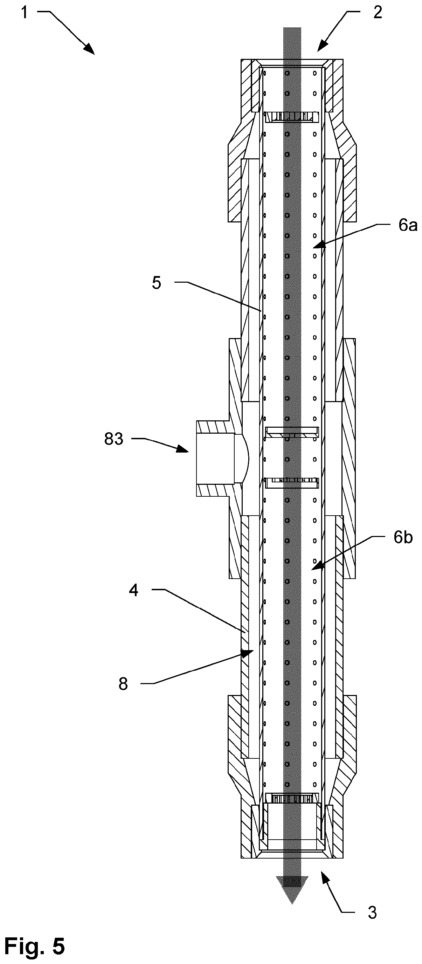

The inner tube 5 forms a catalyst chamber 6, which is filled with granular piezoelectric catalyst (not shown). The granular piezoelectric catalyst may be arranged in at least one catalyst bed 6a, 6b. The inner tube 5 and thereby the catalyst chamber 6 is fluidly connected to the main fluid inlet 2 and the main fluid outlet 3. When the catalyst device in in use, polluted water flows from the main fluid inlet 2 through the bed 6a, 6b of piezoelectric catalyst within the catalyst chamber 6 to the main fluid outlet 3 (cf. Fig. 5).

The space between the inner tube 5 and the outer tube 4 defines an auxiliary fluid chamber 8, which fluidly connected to an auxiliary fluid inlet 83 provided on the outer tube 4. In the shown embodiment, the auxiliary fluid inlet is arranged between two catalyst beds 6a, 6b. The outer wall of the inner tube 5 is a separating wall 81 separating the auxiliary fluid chamber 8 from the catalyst chamber 6. The separating wall 81 is provided with a plurality of through holes 53, which are radially arranged along the inner tube 5. Thus, the inner tube 5 extends along the outer tube 4, such that the plurality of radial through holes are distributed along the length of the catalyst chamber 6 and its respective catalyst beds 6a, 6b.

The through holes 53 may have a diameter in the range of 0.1 to 3 mm and are spaced apart in longitudinal direction of the inner tube 5 by less than 50 mm and/or the radial distance between the inner tube 5 and the outer tube 4 is in the range of 5 to 50 cm. The total number and size of the through holes 53 is such that the ratio of the total cross-sectional area of all through holes to the cross-sectional area of the inner tube is between 0.2 to 2.

The spacing of through holes 53 along the longitudinal direction of the inner tube may be uniform or it may vary such that the spacing between through holes 53 closer to the auxiliary fluid inlet 83 is larger than the spacing between through holes 53 closer to the main fluid inlet 3 or main fluid outlet 4.

The outer tube 4 and the inner tube 5 are connected to each other with a removable cap 43 at each end accommodating the main fluid inlet 2 and the main fluid outlet 3, respectively.

When in use, polluted water is fed through the main fluid inlet 2 into the catalyst chamber 6 inside the inner tube 5 towards the main fluid outlet 3 (fig. 5). The piezoelectric catalyst is activated through the piezoelectric effect (i.e. mechanical stress is applied to trigger an electrochemical reaction) by subjecting the piezoelectric catalyst to a turbulent flow of a water at sufficient fluid velocities. The flow rate of the polluted water and the packing of the piezoelectric catalyst is chosen to achieve a gentle to intermediate activation of the piezoelectric catalyst while minimizing the pressure drop between main inlet and main outlet. The chosen flow conditions are sufficient to ensure a stable performance for a predetermined time while minimising the energy consumption.

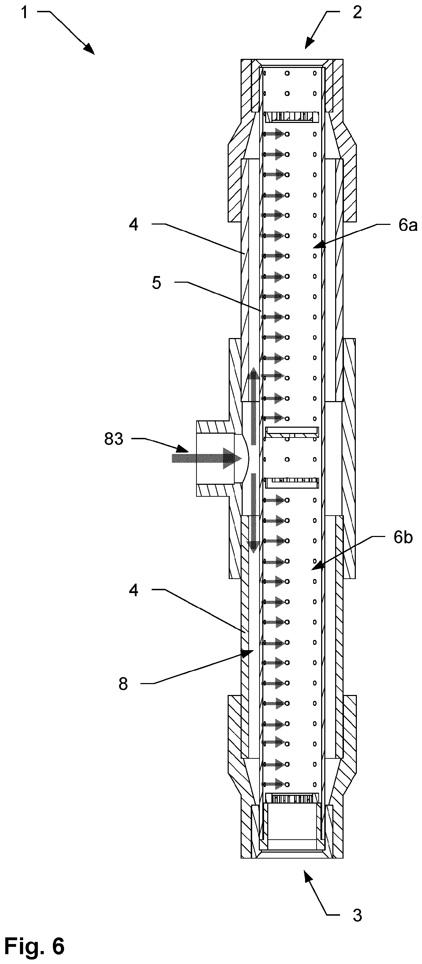

After a predetermined time or at predetermined intervals, the performance of the piezoelectric catalyst may drop. When this happens, a regeneration fluid is flown from the auxiliary fluid inlet 83 into the auxiliary fluid chamber 8 and from there enters the catalyst chamber 6 through the plurality of through holes 53, which are distributed over a large area of the catalyst chamber 6 (cf. Fig. 6). The regeneration fluid is thereby evenly distributed over the entire bed 6a, 6b of piezoelectric catalyst. The arrangement and dimensions of the through holes 53 is such that a uniformly distributed but turbulent flow is generated that transports the regeneration medium through the bed 6a, 6b of piezoelectric catalyst towards the main fluid outlet 3 and/or the main fluid inlet 2. Thus, the through holes 53 are designed to obtain a turbulent flow of water through the catalyst chamber 6 for activation of the piezoelectric catalyst.

Good results have been obtained with a packing of 150 to 300 grams of piezoelectric catalyst per litre of volume of the catalyst chamber 6. The granular piezoelectric catalyst may have a particle size in the range of 3 to 20 mm and may have a porosity of 50 to 95 % and/or a macroscopic young's modulus of 10 to 500 MPa.

The catalyst chamber 6 is further provided with a perforated retainer plate 7 at both end 41, 42 to hold back the granular piezoelectric catalyst. The retainer plate may have the size of the inner diameter of the outer tube 4 and is arranged such that sufficient space is provided between the retainer plate 7 and the main fluid inlet 2 and/or main fluid outlet 3 to minimize pressure losses.

In the shown catalyst device, a perforated spacer 71 is arranged in the centre of the inner tube 5 between the two catalyst beds 6a, 6b. However, any number of spacers can be introduced to form a multitude of beds. In the shown catalyst device, the auxiliary fluid inlet 83 is arranged in centre of the outer tube 4 near the perforated spacer 71.

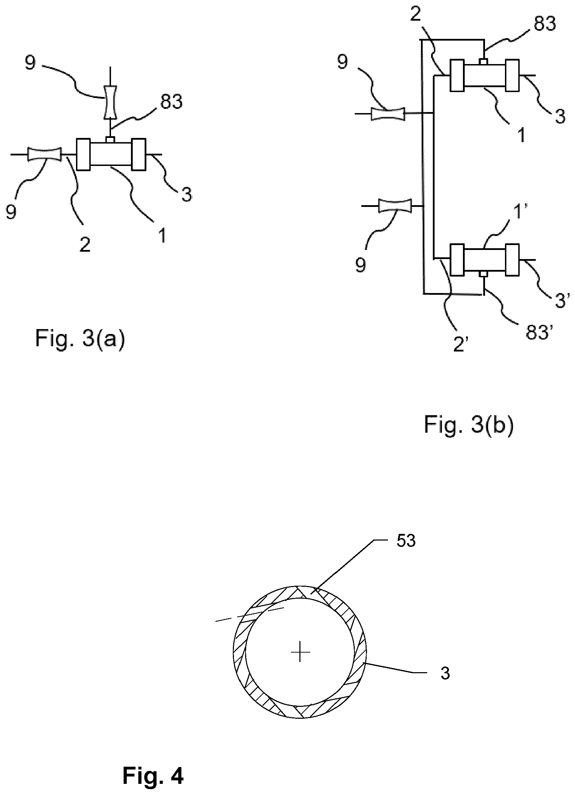

Fig. 3 shows a schematic diagram of a catalyst device arrangement including means for introducing gas 9, typically air, into the polluted water and/or the regeneration fluid before entering the catalyst chamber 6 or the auxiliary fluid chamber 8, respectively. The means for introducing gas 9 may be a venturi nozzle or venturi injector. The introduction of gas to obtain a gas-water ratio of approx. 0.05 to 0.5 leads to improved activation of the piezoelectric catalyst. The means for introducing gas 9 may be arranged upstream of one single catalyst device 1 (Fig. 3(a)) or upstream of several catalyst devices 1, 1' fluidly arranged in parallel (Fig. 3(b)). Means for introducing gas 9 are optional and may be present on the main fluid inlet 2 and/or the auxiliary fluid inlet 83.

Fig. 4 shows a cross section of an inner tube 3 with several angled through holes 53. The through holes 53 have a longitudinal axis which may be at an angle of 0 to 70 degrees to a perpendicular of the separating wall. Angles in the range of 30 to 70 degrees may lead to enhanced catalyst activation. Neighbouring through holes may angled in different direction to create even more turbulence and therefore enhanced activation of the catalyst.

### Reference Signs

- 1: catalyst device
- 2: main fluid inlet
- 3: main fluid outlet
- 4: outer tube
- 41: first end of outer tube
- 42: second end of inner tube
- 43: cap
- 5: inner tube
- 51: first end of inner tube
- 52: second end of inner tube
- 53: through hole
- 6: catalyst chamber
- 7: retainer plate
- 71: perforated spacer
- 8: auxiliary fluid chamber
- 81: separating wall
- 83: auxiliary fluid inlet
- 9: means for introducing gas / venturi nozzle / venturi injector

## Claims

1. Catalyst device (1) for degrading organic pollutants, in particular perfluorinated alkyl substances (PFAS), in water comprising a main fluid inlet (2), a main fluid outlet (3), an auxiliary fluid inlet (83), a catalyst chamber (6) fluidly connected with the main fluid inlet (2) and the main fluid outlet (3), and an auxiliary fluid chamber (8) fluidly connected with the auxiliary fluid inlet (83); wherein the catalyst chamber (6) comprises at least one catalyst bed (6a, 6b) with a granular piezoelectric catalyst; wherein a separating wall (81) provided with a plurality of through holes (53) separates the auxiliary fluid chamber (8) and the catalyst chamber (6), wherein the plurality of through holes (53) are distributed over the separating wall (81) to create a turbulent flow of water in the catalyst chamber (6) for activation of the bed (6a, 6b) of piezoelectric catalyst when water flows from the auxiliary inlet (83) towards the fluid outlet (3).

2. Catalyst device according to claim 1, wherein the catalyst device (1) comprises an outer tube (4) with a first end (41) and an opposite second end (42) and an inner tube (5) with a first end (51) and an opposite second end (52); wherein the inner tube (5) defines the catalyst chamber (6) and is arranged concentric within and spaced apart from the outer tube (4); and wherein the auxiliary fluid chamber (8) is defined by the space between the outer tube (4) and the inner tube (5); wherein the inner tube (5) forms the separating wall (81), and wherein the through holes (53) are radially distributed over the length of the inner tube (5).

3. Catalyst device according to claim 2, wherein the inner tube and the outer tube are connected to each other at their respective ends (41, 51; 42, 52) with a removable cap (43) accommodating the main fluid inlet (2) and the main fluid outlet (3) respectively.

4. Catalyst device according to one of the preceding claims, wherein the catalyst chamber (6) includes a perforated retainer plate (7) at both ends near the main fluid inlet (2) and the main fluid outlet (3) defining a perforated wall of the catalyst chamber (6).

5. Catalyst device according to one of the preceding claims, wherein the catalyst chamber (6) comprises at least two catalyst beds (6a, 6b) separated from each other by a perforated spacer (71).

6. Catalyst device according to one of the preceding claims, wherein the piezoelectric catalyst is arranged within a mesh to form the at least one bed (6a, 6b) of piezoelectric catalyst.

7. Catalyst device according to one of the preceding claims, wherein the piezoelectric catalyst is packed in the at least one catalyst bed (6a, 6b) with 50 to 500 grams, preferably 150 to 300 grams of piezoelectric catalyst per litre of volume of the catalyst bed (6a, 6b) and/or the granular piezoelectric catalyst has a particle size in the range of 1 to 50 mm, preferably 3 to 20 mm.

8. Catalyst device arrangement comprising a catalyst device according to one of the preceding claims and means for introducing gas into the water upstream of the main fluid inlet (2) or the auxiliary fluid inlet (83) of the auxiliary fluid chamber (8) to generate a fluid with a gas-water ratio of in the range of 0.05 to 1.0, preferably with a gas-water ratio in the range of 0.1 to 0.3.

9. Method for degrading organic pollutants, in particular perfluorinated alkyl substances (PFAS), in water using a catalyst device (1) of one of claims 1 to 7 or a catalyst device arrangement of claim 8, wherein polluted water is fed through the main fluid inlet (2) into the catalyst chamber (6) for degrading the organic pollutant via the catalytic reaction of the piezoelectric catalyst while the water flows towards the main fluid outlet (3).

10. Method according to claim 9, wherein a regeneration fluid is fed through the auxiliary fluid inlet (83) into the auxiliary fluid chamber (8) and the regeneration fluid is evenly distributed through the plurality of through holes (53) over the catalyst chamber (6) to generate a turbulent flow for activation of the piezoelectric catalyst.

11. Method according to claim 10, wherein the regeneration fluid is fed to the catalyst device simultaneously with the polluted water or feeding polluted water through the main fluid inlet is stopped before feeding the regeneration fluid.

12. Method according to one of claims 9 to 11, wherein the polluted water or the regeneration fluid is enriched with gas upstream of the fluid inlet or the first chamber to generate a fluid with a gas-water ratio of in the range of 0.05 to 1.0, preferably with a gas-water ratio in the range of 0.1 to 0.3.

13. Method according to one of claims 10 to 12, wherein the regeneration fluid is polluted water, treated polluted water, clean water, an organic solvent, or a mixture thereof; and/or the regeneration fluid comprises an acid, a base, a salt, a gas or a mixture thereof.

14. Method according to one of claims 10 to 12, wherein the regeneration fluid is made to cavitate when it passes through the through holes.

15. Method according to one of claims 9 to 13, wherein the flow of polluted water through the main fluid inlet and/or the flow of regeneration fluid through the auxiliary fluid inlet is pulsed.
